# EUROPEAN PATENT SPECIFICATION

(11) **EP 0 801 117 B1**
(45) Date of publication and mention of the grant of the patent: **26.11.2003**
(21) Application number: 96114842.6
(22) Date of filing: 16.09.1996
(51) Int. Cl.: C09D 5/16

(54) **Antifouling resin composition**
Anwuchsverhindernde Harzzusammensetzung
Composition de résine anti-salissure

(30) Priority: 11.04.1996 JP 11533396
(43) Date of publication of application: 15.10.1997
(73) Proprietor: NIPPON PAINT CO., LTD., Kita-ku, Osaka-shi, Osaka 531 (JP)
(72) Inventor: Yamamori, Naoki, Tanabecho, Tsuzuki-gun, Kyoto 610-03 (JP); Harada, Akio, Nara-shi, Nara 630 (JP); Yokoi, Junji, Ikoma-shi, Nara 630-01 (JP); Imanishi, Yukio, Joyo-shi, Kyoto 610-11 (JP)
(74) Representative: Brehm, Hans-Peter

(56) References cited:
- EP-A- 0 659 848
- EP-A- 0 711 813
- GB-A- 2 167 075
- DATABASE WPI Week 8808 Derwent Publications Ltd., London, GB; AN 52880 XP002056175 "ANTIFOULING AGENT" & JP 63 008 462 A (TOSHIBA SILICONE) 14 November 1988

## Description

### FIELD OF THE INVENTION

The present invention relates to an antifouling resin composition for use in the protection of (e.g.) marine structures and industrial water systems from the damage due to adhesion and growth of water organisms.

### BACKGROUND OF THE INVENTION

On marine structures such as ships, oceanic constructions, buoys and fish farming nets and industrial water systems, all of which are under constant exposure to water being inhabiting by various organisms. A variety of bacteria and other microorganisms become established with time on the underwater surface of marine structures and accordingly aquatic animals and plants which feed on them, such as barnacles, Mytilidae, Ulvales and diatoms, attach themselves. As the underwater surface of a marine structure is covered up with such marine organisms, there take place corrosion of the affected part, decreased marine fuel efficiency due to increased frictional resistance of the'ship bottom against seawater, sinking of buoys due to decreased buoyancy, massive death of fish due to clogging of fish farming nets, and decreased working efficiency.

In cooling and other industrial water systems utilizing natural water such as river water, sea water or lake water and closed-circuit cooling systems utilizing medium-quality water or even tap water, bacteria, diatoms or blue-green algae e.g. proliferate to cause not only deterioration of water quality but also various troubles such as decreased cooling efficiencies, plugging of water pipes or decreased water flows due to deposits of such organisms on the system walls.

For protection against adhesion of such noxious creatures, it is common practice to use an antifouling coating composition.

In recent years, hydrolyzable antifouling coating compositions containing some or other trialkyltin-containing polymers as a binder have been employed. The principle of such compositions is that the trialkyltin-containing polymer is hydrolyzed in a Weakly alkaline aqueous environment such as sea water to liberate the organotin compound, and at the same time, the vehicle is solubilized to release the further containing antifouling agents.

The antifouling component thus released is highly toxic so that it destroys marine creatures or injures them to the extent that they will be no longer able to attach them to the treated surface to thereby exhibit an antifouling effect. Thus, the conventional antifouling coating compositions invariably contain compounds which are hazardous to the earths's ecology and, therefore, present serious environmental pollution problems.

European Patent Application EP 0 659 848 A2 discloses a coating composition and antifouling paint comprising a copper compound containing antifouling agent in addition to a specific coating composition. This coating composition may comprise a polymer (A) obtainable by polymerizing one or more unsaturated acid anhydrides or unsaturated carboxylic acids (a1) and one or more other unsaturated monomers (a2) copolymerizable with the component (a1), and at least one compound (B) selected from one or both of (b1) the group comprising amino acids, compounds having one or more carboxyl groups in the molecule, compounds having both hydrophobic and hydrophilic groups in the molecule, chelate compounds, hydroxyl- or acetyl-substituted carboxylic acid esters, ion-exchangeable layer clay minerals and pulverized inorganic materials which have been made lipophilic with an organic material, and (b2) compounds which are crystallizable and selected from polyether compounds, polyester compounds, poyether-polyester compounds, olefinic glycol compounds, acrylic esters, methacrylic esters and polycarbonate compounds. The fore-mentioned unsaturated monomer (a2) may comprise a compound represented by the following formula: 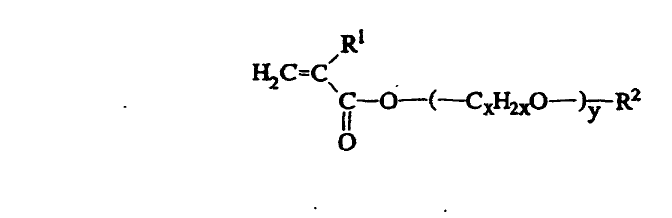 wherein
R¹ is a hydrogen atom or a methyl group;
x is an integer of 1 to 6;
y is an integer of 1 to 10; and
R² is a hydrogen atom, a straight, branched or cyclic alkyl group, an aryl group or an aralkyl group, provided that when an unsaturated acid anhydride is used as the component (a1) of the polymer (A), R² is not a hydrogen atom.

The document lists not less than 139 suited monomers. Among them, 138 stated (meth)acryl ester compounds do only include aliphatic ester groups. Compound No. 25 that is CH₂=C(R)CO₂ (CH₂CH₂O)₂C₆H₅ is end capped with a benzene group.

UK Patent Application GB 2 167 075 A is related to a treatment of surfaces to inhibit the adhesion of living organism thereto. Said treatment comprises to apply a certain composition to said surface. According to example 1, said composition may be obtained by reacting a polyethylene glycol capped with a methoxy group and with a methacrylol group (for example CH₂ = C(CH₃)COO(CH₂CH₂O)₈CH₃) with methacrylic acid in order to obtain a polymer presenting antifouling properties. The disclosed (meth)acryl acid ester compounds or (meth)acryt acid amid compounds do only include aliphatic ester groups or aliphatic amid groups.

Japanese Kokai Publication Sho-60-170673 discloses a coating composition comprising a polymer of a polyoxyethylene chain-containing polymerizable unsaturated monomer. This polymer dissolves gradually in water to prevent attachment of aquatic organisms to the substrate surface. Japanese Kokai Publication Hei-5-320539 discloses a technology by which the polyoxyethylene chain is oriented in the surface layer of the paint film to render the surface hydrophilic and thereby prevent attachment of aquatic organisms.

These techniques do not rely on highly toxic antifouling compounds but provide antifouling effects by enhancing the solubility or hydrophilicity of the surface of the paint film. However, such methods utilizing enhanced hydrophilicity of the film are not satisfactory in the duration of antifouling efficacy because once the surface is attached by aquatic organisms and pollutants, there occurs a considerable decrease in antifouling effect.

Furthermore, while these techniques insure antifouling effects by releasing film component, it is difficult to control the rate of release, with the result that the problem was inevitable that the rate of release is too low to provide adequate antifouling effect, or too high for a sufficient duration of efficacy.

Japanese Kokai Publication Hei-3-128302 discloses a coating composition for preventing adhesion of aquatic organisms which comprises an alkyl-containing phenol derivative. The alkyl-containing phenol derivative has fairly high antifouling activity and low toxicity, but it is essential for that derivative to concomitantly employ a water repellent compound in order that a long-term effect can be assured.

### SUMMARY OF INVENTION

It is the object of the present invention to provide an antifouling resin composition with non toxicity, high antifouling activity, and an extended duration of the activity.

The solution of this object according to the present invention is an antifouling resin composition
comprising a resin (A) having an ethylene backbone chain with pendant groups, wherein at least 5% of said pendant groups form carboxyl groups, and wherein
a number of said carboxyl groups equal to 5 to 95% of the total number of pendant groups
being linked, via an amide bond or via an ester bond, to groups of the following general formula (1):

X-R-D- (1)

wherein X-R- represents a group of the following formula (4): 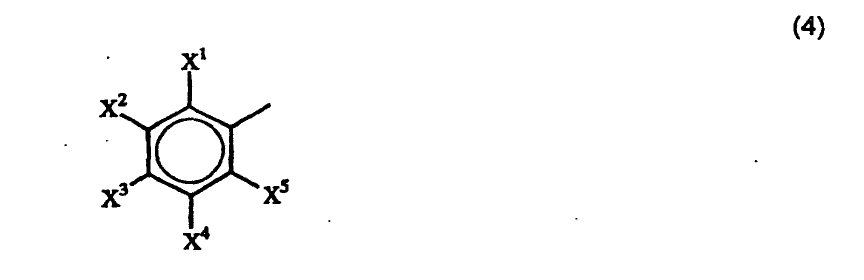 wherein at least one of the substituents X¹, X², X³, X⁴ and X⁵ represents a branched-or straight-chain alkyl group having 6 to 10 carbon atoms and
wherein at least a further one of the substituent(s) X¹, X², X³, X⁴ and X⁵ represents a polar group; and
wherein the remaining substituent(s) X¹, X², X³, X⁴ and X⁵ represents hydrogen; and
wherein D represents a hydrophilic polymer residue.

A preferred embodiment of the present invention is related to an antifouling resin composition containing in addition to the fore-mentioned resin (A) a further resin (B), for example selected from a group including silicone resins, acryl resins, polyester resins and chlorinated rubber.

### DETAILED DESCRIPTION OF THE INVENTION

The antifouling resin composition of the present invention comprises a resin (A) comprising an ethylene backbone chain with at least 5% of its pendant groups being carboxyl groups, or said resin (A) and another resin (B). In the specification, the term "backbone chain" means a straight chain or a branched chain to which a group or groups are attached in a manner so called pendant form. The term "pendant group" as used herein means a group attached to said ethylene backbone chain in a manner so called pendant form.

There is no particular limitation on said resin (A). Thus, for example, homo- or copolymers of carboxyl-containing ethylenically unsaturated monomers; and copolymers of any of such carboxyl-containing ethylenically unsaturated monomers with non-carboxyl-containing ethylenically unsaturated monomers can be mentioned. The term "carboxyl" as used herein means carboxylic acids and their derivatives.

As examples of the above-mentioned carboxyl-containing ethylenically unsaturated monomers, acrylic acid and its esters, methacrylic acid and its esters, and acryl amide can be mentioned. As examples of the above-mentioned non-carboxyl-containing ethylenically unsaturated monomers, styrene and vinyl acetate can be mentioned.

A number of said carboxyl groups equal to 5 to 95% of the total number of pendant groups, in said resin (A) are linked by an amide or ester bond to groups of the following general formula (1):

X-R-D- (1)

wherein

D represents a hydrophilic polymer residue; this hydrophilic polymer is not critical in kind, thus including chain compounds composed mainly of a polyoxyalkylene chain, such as polyoxyethylene or polyoxypropylene chain, and chain compounds
composed mainly of a polyamide chain. Particularly preferred are chain compounds composed mainly of a polyoxyalkylene chain; and
the group X-R- represents a group corresponding to the following general formula (4). 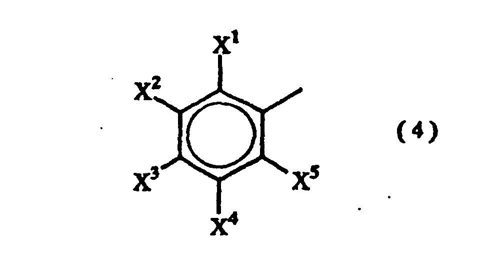 wherein at least one of said substituents X¹, X², X³, X⁴ and X⁵ represents a branched-or straight-chain alkyl group having 6 to 10 carbon atoms; and
at least a further one of said substituents X¹, X², X³, X⁴ and X⁵ represents a polar group; and
the remainding substituent(s) X¹, X², X³, X⁴ and X⁵ represent(s) hydrogen.

Exemplary alkyl group mentioned above includes n-hexyl, n-nonyl, n-octyl, and n-decyl.

The polar group mentioned above includes but is not limited to hydroxyl, amino, carboxyl, sulfo, alkoxyl, halogen and ethylene oxide. Here OH, NH₂, COOH, SO₃H, and ethylene oxide, represent preferred polar groups.

The substitution positions of said alkyl group and polar group are not critical but are preferably para position from the standpoint of antifouling activity.

The compound corresponding to general formula (1) includes but is not limited to hexaethylene glycol 2-hydroxy-5-nonylbenzyl ether, tetraethylene glycol 2-carboxy-5-octylbenzyl ether, pentaethylene glycol 2-hydroxy-5-nonylanilinoethyl ether, hexaethylene glycol 3-nonyl-4-hydroxyphenyl acetate, and hexaethylene glycol 4-nonylphenyl ether.

In view of its high antifouling activity, the group R-D- in general formula (1) is preferably a group of the following general formula (2) or a group of the following general formula (3):

R-CH₂-(OCH₂CH₂)ₙ-NCH₃- (2)

R-CH₂-(OCH₂CH₂CH₂)ₙ-NCH₃- (3)

In the above formulas, n represents an integer of 2 to 16. Referring to resin (A) for use in the present invention, the number of said groups of general formula (1) linked to carboxyl groups by an amide or ester bond is equal to 5 to 95% of the total number of the pendant groups. If it is less than 5%, no sufficient antifouling activity will be insured.

If the limit of 95% is exceeded, the adhesion of antifouling resin composition to marine structures and other structures will be sacrificed.

Resin (A) having said groups of general formula (1) can be produced typically by the following procedure.

In the first place, the groups of general formula (1) to be linked is synthesized. As the starting compound, an aromatic compound such as alkyl-substituted phenol, alkyl-substituted hydroquinone, alkyl-substituted catechol, alkyl-substituted resorcinol, hydroxyphenylacetic acid ester, alkyl-substituted aniline, amlnophenol, alkyl-substituted aminophenol, alkyl-substituted benzoic acid, alkyl-substituted hydroxybenzoic acid, salicylic acid, alkyl-substituted hydroxybenzenesulfonic acid and alkyl-substituted phenylglycidic acid is employed. Where necessary, the desired substituent groups such as alkyl and amino are introduced by the conventional substitution reactions such as for example alkylation or amination. Then, at the position corresponding to the side chain, this compound is subjected to addition reaction with an epoxy compound such as for example ethylene oxide, propylene oxide, epichlorohydrin, polyethylene glycol diglycidyl ether or polypropylene glycol diglycidyl ether. The alkyl group mentioned above is preferably an alkyl group having 6 to 10 carbon atoms.

Then, where necessary, the hydroxyl group or amino group remaining at the free terminal group of the polyalkylene chain such as the polyoxyethylene chain or polyoxypropylene chain is subjected to esterification reaction or amidation reaction with acrylic acid, methacrylic acid, acrylamide or glycidyl methacrylate to introduce an acryloyl or methacryloyl group and thereby produce an acrylic monomer.

The above acrylic monomer can also be provided in the form of a structure interrupted by -C₂H₄-NH-CH₂-CH(OH)- by introducing e.g. a vinyl group into the benzene ring of the starting compound, oxidizing it to an epoxy group, and attaching a polyoxyethyleneamine or polyoxypropyleneamine to said epoxy group.

Moreover, by introducing e.g. a vinyl group into said benzene ring, oxidizing it to an epoxy group, and attaching a polyoxyethylenediamine or polyoxypropylenediamine, or a compound available on oxidation of one of the two amine moieties of such a diamine to an alkoxyamide, to said epoxy group, there can be obtained a structure having an amino group at one terminal group and having a - C₂H₄-NH-CH₂-CH(OH)- residue connected to the other terminal group of the polyoxyethylene chain or polyoxypropylene chain.

The resulting acrylic monomer and acrylic acid or methacrylic acid and other acrylic monomer are dripped into a solvent for example such as xylene, methyl isobutyl ketone or n-butanol and are reacted at 80 to 90 °C to provide resin (A).

There is no particular limitation on said resin (B) for use in the present invention, thus including, but not limited to, acrylic resin, silicone resin, polyester resin, chlorinated rubber, vinyl chloride resin, chlorinated polyethylene resin, chlorinated polypropylene resin, styrene-butadiene resin, epoxy resin, polyamide resin, petroleum resin, wax, paraffin, rosin esters, rosin-type resin. These resins can be used singly or in combination.

A preferred resin (B) for the purposes of the present invention includes silicone resin, acrylic resin, polyester resin, and chlorinated rubber.

The ratio of said resin (A) to said resin (B) is 2:98 through 98:2. If the ratio is smaller than 2, the number of pendant groups which have antifouling effect will be too small for an adequate antifouling effect. On the other hand, if the ratio exceeds 98, the adhesion of the resulting antifouling resin composition to marine structures will be insufficient.

However, even when the antifouling resin composition is formulated using resin (A) alone without addition of resin (B), this adhesion to marine structures can be improved by other means.

In regard to the manner of combining said resin (A) with said resin (B) in the present invention, said resin (A) and resin (B) may be mixed and kneaded together to provide a kneaded mixture. In this case, the two resins are preferably finely dispersed in each other to present a microphase-separated structure (matrix-dispersed phase structure).

For improved adhesion to a substrate, such as a marine structure, and enhanced antifouling activity, said resins (A) and (B) preferably form an interpenetrating polymer network (IPN), in which polymer network of resin (A) and polymer network of resin (B) interpenetrate each other.

By mixing resins (A) and (B) either in solution form or in dispersed state and curing the resulting mixture to cause a bilateral crosslinking, such an IPN can be formed, or by a unilateral crosslinking, a semi-IPN can be formed to thereby increase entanglement of molecules.

As the resin (B).for use in forming an IPN with resin (A), silicone resin is preferred and with silicone resin, improved adhesion and antifouling activity can be expected.

The antifouling resin composition of the present invention may be supplemented with other known antifouling agents including copper or zinc compounds and/or known bactericides and insecticides as auxiliary antifouling components. Moreover, additives, such as for example plasticizers, pigments or extenders, which are commonly used in coating compositions can be incorporated. The known solvents can also be added in suitable proportions.

when a substrate such as a marine structure is coated with the antifouling resin composition of the present invention and installed in a volume of water, the resinous segment of the composition adheres to the substrate surface, on the other hand, and its hydrophilic polymer segment and the groups of the general formula (1) bound to said hydrophilic polymer are semi-free in water, thus assuming the condition known as pseudo-soluble, in which an antifouling resin composition is connected to insoluble matrix through a water soluble spacer chain.

By assuming the above-mentioned condition of pseudo-dissolution, the antifouling resin composition of the present invention fully exhibits its antifouling activity and, moreover, as its antifouling component is not dissolved to be lost in water, remains effective for a long time.

Being constituted as above, the antifouling resin composition of the present invention exhibits a marked and sustained antifouling effect with a minimum of toxicity. Moreover, the composition presents no remarkable residue problem, thus being friendly to the earth's ecology and working environment. Therefore, the composition of the present invention can be used advantageously for protection against attachment of aquatic creatures.

### EXAMPLES

The following examples serve to further illustrate the present invention, but are by no means constituted to limitate the scope of the invention.

### Example 1:

A four-necked flask equipped with a stirrer and a nitrogen gas inlet pipe was charged with 100 g of xylene and 50 g of methyl isobutyl ketone and heated at 90 °C. Then, a mixture of 75 g of methyl methacrylate, 75 g of hexaethylene glycol 2-hydroxy-5-nonylbenzyl ether acrylate, and 1.5 g of azobisisobutyronitrile was added dropwise within 3 hours. The reaction mixture was further held at the same temperature for 1 hour. The resulting resin solution A had a solids content of 49.2% and a number-average molecular weight of 11500.

### Example 2:

A four-necked flask equipped with a stirrer and a nitrogen gas inlet pipe was charged with 100 g of xylene and 50 g of methyl isobutyl ketone and heated at 90 °C. Then, a mixture of 75 g of methyl methacrylate, 5 g of styrene, 70 g of hexaethylene glycol 2-amino-5-octylbenzyl ether methacrylate, and 1.5 g of azobisisobutyronitrile was added dropwise within 3 hours. This reaction mixture was further held at the same temperature for 1 hour. The resulting resin solution B had a solids content of 48.9% and a number-average molecular weight of 12000.

### Example 3:

A four-necked flask equipped with a stirrer and a nitrogen gas inlet pipe was charged with 100 g of xylene and 50 g of methyl isobutyl ketone and heated at 85 °C. Then, a mixture of 80 g of methyl methacrylate, 70 g of tetraethylene glycol 2-carboxy-5-octylbenzyl ether acrylate, and 1.2 g of azobisisobutyronitrile was added dropwise within 3 hours. The whole mixture was further held at the same temperature for 1 hour. The resulting resin solution C had a solids content of 48.7% and a number-average molecular weight of 14000.

### Example 4:

A four-necked flask equipped with a stirrer and a nitrogen gas inlet pipe was charged with 100 g of xylene and 50 g of methyl isobutyl ketone and heated at 90 °C. Then, a mixture of 80 g of methyl methacrylate, 70 g of hexaethylene glycol 3-nonyl-4-hydroxyphenylacetate acrylate, and 1.5 g of azobisisobutyronitrile was added dropwise within 3 hours. The whole mixture was further held at the same;temperature for 1 hour. The resulting resin solution D had a solids content of 49.2% and a number-average molecular weight of 12000.

### Example 5:

A four-necked flask equipped with a stirrer and a nitrogen gas inlet pipe was charged with 90 g of xylene and 60 g of methyl isobutyl ketone and heated at 90 °C. Then, a mixture of 80 g of methyl methacrylate, 70 g of pentaethylene glycol 2-hydroxy-5-nonylanilinoethyl ether acrylate, and 1.5 g of azobisisobutyronitrile was added dropwise within 3 hours. The whole mixture was further held at the same temperature for 1 hour. The resulting resin solution E had a solids content of 49.5% and a number-average molecular weight of 13000.

### Example 6:

A four-necked flask equipped with a stirrer and a nitrogen gas inlet pipe was charged with 90 g of xylene and 60 g of methyl isobutyl ketone and heated at 90 °C. Then, a mixture of 80 g of methyl methacrylate, 70 g of pentaethylene glycol 2-hydroxy-5-nonylanilinoethyl ether acrylate, and 1.5 g of azobisisobutyronitrile was added dropwise within 3 hours. The whole mixture was further held at the same temperature for 1 hour. The resulting resin solution F had a solids content of 49.8% and a number-average molecular weight of 13000.

### Example 7:

A four-necked flask equipped with a stirrer and a nitrogen gas inlet pipe was charged with 90 g of xylene and 60 g of methyl isobutyl ketone and heated at 80 °C. Then, a mixture of 80 g of methyl methacrylate, 70 g of pentaethylene glycol 2-hydroxy-4-nonylphenyl ether acrylate, and 1.1 g of azobisisobutyronitrile was added dropwise within 5 hours. The whole mixture was further held at the same temperature for 2 hour. The resulting resin solution G had a solids content of 49.3% and a number-average molecular weight of 18000.

### Example 8 :

A four-necked flask equipped with a stirrer and a nitrogen gas inlet pipe was charged with 90 g of xylene and 60 g of methyl isobutyl ketone and heated at 90 °C. Then, a mixture of 50 g of methyl methacrylate, 40 g of styrene, 60 g of pentaethylene glycol 4-hydroxy-3-nonylphenyl ether acrylate, and 1.5 g of azobisisobutyronitrile was added dropwise within 3 hours. The whole mixture was further held at the same temperature for 1 hour. The resulting resin solution H had a solids content of 49.6% and a number-average molecular weight of 12000.

### Example 9:

A four-necked flask equipped with a stirrer and a nitrogen gas inlet pipe was charged with 90 g of xylene and 60 g of methyl isobutyl ketone and heated at 90 °C. Then, a mixture of 50 g of methyl methacrylate, 10 g of styrene, 90 g of pentaethylene glycol 2-tetraethylene glycol-5-decylbenzyl ether methacrylate, and 1.5 g of azobisisobutyronitrile was added dropwise within 3 hours. The whole mixture was further held at the same temperature for 1 hour. The resulting resin solution I had a solids content of 49.4% and a number-average molecular weight of 12000.

### Example 10 and non-inventive Examples 11 to 14:

Reactions were carried out according to the recipes shown in Table 1 to provide resin solution J to N. The solids contents and number-average molecular weights of the respective resins are also shown in Table 1.

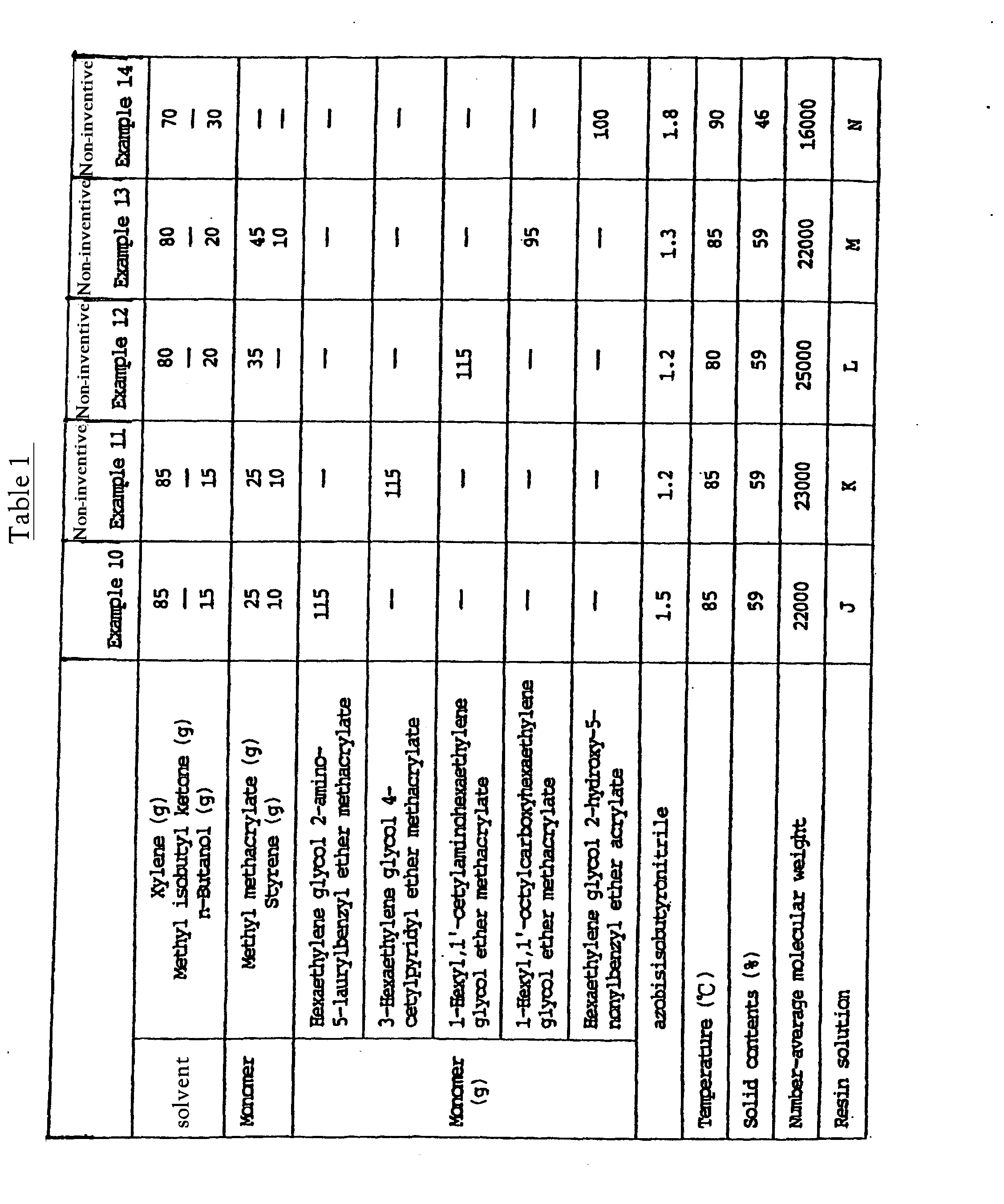

### Non-inventive Example 15:

Resin solution 0 was prepared by mixing 100 g of resin solution N obtained in Example 14 with 100 g of reaction-curing type polydimethylsiloxane thoroughly.

### Non-inventive Example 16:

Resin solution (P) was prepared by mixing 100 g of resin solution (N) obtained in Example 14, 35 g of divinylbenzene, 45 g of methyl methacrylate, and 3 g of Irgacure 651 (Ciba-Geigy).

### Non-inventive Example 17:

According to an N-methyl-N-(2-hydroxy-5-nonylbenzyloxy)pentaoxyethyleneethylmethacrylamide (HNPM-6E): methyl methacrylate (MMA) charge ratio of 1:0 and the following recipe, a polymer solution was prepared.

| | |
|---|---|
| HNPM-6E | 324 mg |
| Azobisisobutyronitrile | 1.79 mg |
| Toluene | 0.220 ml |

Thus, the above mixture was freeze-degassed with liquid nitrogen and a radical polymerization reaction was conducted under a nitrogen atmosphere at 70 °C within 24 hours. After the reaction, the toluene was distilled off under reduced pressure and the residue was dissolved in chloroform. This solution was dripped into hexane for reprecipitation to provide a polymer. Yield 9.48 mg or 2.93%. Then, 20 mg of reaction-curing polydimethylsiloxane and 30 mg of xylene and the mixture was stirred to provide resin solution Q.

### Example 18:

According to an HNPM-6E:MMA charge ratio of 5:1 and the following recipe, the reaction was conducted in otherwise the same manner as Example 17 to provide a polymer solution.

| | |
|---|---|
| HNPM-6E | 308 mg |
| MMA | 10.3 mg |
| Azobisisobutyronitrile | 2.04 mg |
| Toluene | 0.198 ml |

Yield 24.4 mg or 7.67%. The copolymerization ratio determined by 1H-NMR spectrometry was HNPM-6E:MMA = 12:88. A 50% solution of this polymer in xylene was designated resin solution R.

### Non-inventive Example 19:

According to an HNPM-6E:MMA charge ratio of 1:1 and the following recipe, a polymer solution was prepared in otherwise the same manner as Example 17.

| | |
|---|---|
| HNPM-6E | 303 mg |
| MMA | 50.9 mg |
| Azobisisobutyronitrile | 3.34 mg |
| Toluene | 0.0855 ml |

Yield 59.6 mg or 16.8%. Number-average molecular weight = 14500. The copolymerization ratio determined by 1H-NMR spectrometry was HNPM-6E:MMA = 3:97. A 50% solution of this polymer in xylene was designated resin solution S.

### Non-inventive Example 20:

Using N-methyl-N-(2-hydroxy-5-nonylbenzyloxy)-pentaoxyethyleneethylacrylamide (=HNPA-6E) alone and according to the following recipe, a polymer solution was prepared.

| | |
|---|---|
| HNPA-6E | 402 mg |
| Azobisisobutyronitrile | 2.30 mg |
| Toluene | 4.000 ml |

The above mixture was freeze-degassed with liquid nitrogen and a radical polymerization reaction was carried out under a nitrogen atomosphere at 70 °C within 48 hours. After the reaction, the toluene was distilled off under reduced pressure and the residue was purified by LH20 THF column chromatography. A polymer was recovered from a high molecular weight fraction. Yield 214 mg or 53.1%. Number-average molecular weight = 12000.

Then, 100 mg of chlorinated rubber and 300 mg of xylene were added to 200 mg of the above polymer and the mixture was stirred to provide resin solution T.

### Example 21:

According to an HNPA-6E:MMA charge ratio of 2:3 and the following recipe, a polymer solution was prepared in otherwise the same manner as Example 20.

| | |
|---|---|
| HNPA-6E | 299 mg |
| MMA | 72.1 mg |
| Azobisisobutyronitrile | 4.22 mg |
| Toluene | 3.712 ml |

Yield 258 mg or 69.6%. Number-average molecular weight = 20000. The copolymerization ratio determined by 1H-NMR spectrometry was HNPA-6E:MMA = 33:67. A 50% solution of this polymer in xylene was designated resin solution U.

### Example 22:

According to an HNPA-6E:MMA charge ratio of 1:5 and the following receipe, a polymer solution was prepared in otherwise the same manner as Example 20.

| | |
|---|---|
| HNPA-6E | 203 mg |
| MMA | 175 mg |
| Azobisisobutyronitrile | 6.88 mg |
| Toluene | 3.780 ml |

Yield 265 mg or 70.1%. Number-average molecular weight = 15000. The copolymerization ratio determined by 1H-NMR spectrometry was HNPA-6E:MMA = 14:86. A 50% solution of this polymer in xylene was designated resin solution (V).

### Preparation of paint film testpieces for an antifouling test

The resin solutions A to V prepared in Examples 1 to 10, 18, 21, 22 and non-inventive Examples 11 to 17, 19 and 20 were respectively coated in a thickness of about 100 µm on 5 cm x 5 cm acrylic resin plates and dried at room temperature for 24 hours. In the case of resin solution (P), it was irradiated at 365 nm light after coating on the acrylic resin plates. The paint fi lms thus obtained are designated as Products 23 to 44.

### Antifouling test

In the Coastal Research Institute of Nippon Paint Co., Ltd. at Tamano City, Okayama Prefecture, the testpieces according to Products 23 to 44 were immersed in a body of seawater and the area infested by aquatic life was visually inspected at timed intervals. The results are presented in Table 2.

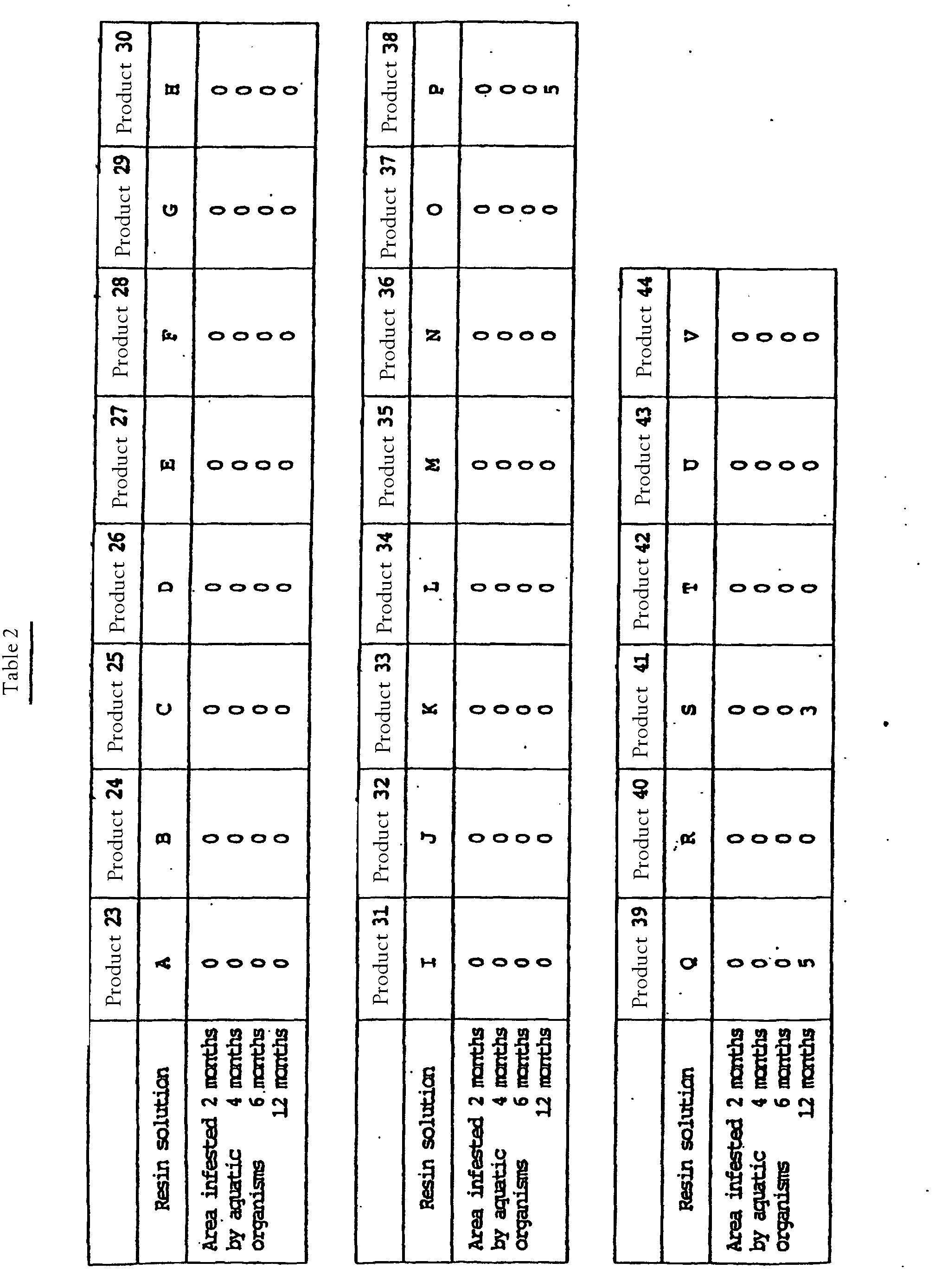

## Claims

1. An antifouling resin composition comprising a resin (A) having an ethylene backbone chain with pendant groups, wherein at least 5% of said pendant groups form carboxyl groups, and
wherein a number of said carboxyl groups equal to 5 to 95% of the total number of pendant groups
being linked, via an amide bond or via an ester bond, to groups of the following general formula (1):
X-R-D- (1)
wherein X-R- represents a group of the following formula (4): 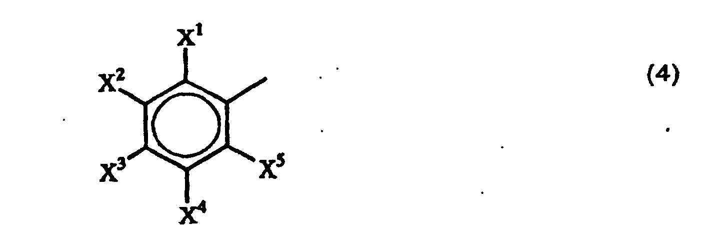 wherein at least one of the substituents X¹, X², X³, X⁴ and X⁵ represents a branched-or straight-chain alkyl group having 6 to 10 carbon atoms; and
wherein at least a further one of the substituents X¹, X², X³, X⁴ and X⁵ represents a polar group; and
wherein the remaining substituent(s) X¹, X², X³, X⁴ and X⁵ represent(s) hydrogen; and
wherein D represents a hydrophilic polymer residue.

2. The antifouling resin composition according to claim 1,
wherein
D represents a hydrophilic polymer residue selected from a group including residues of polyalkyleneoxy groups and residues of chain-like polyamide groups.

3. The antifouling resin composition according to claim 1 or 2,
wherein
R-D- represents a group of the following general formula (2) or (3): 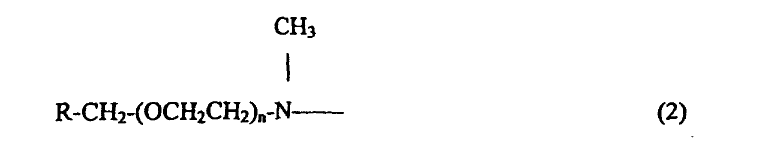 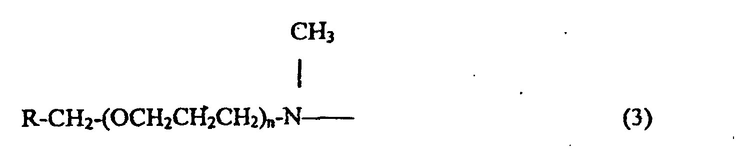 wherein n is an integer of 2 to 16.

4. The antifouling resin composition according to claim 1,
wherein
said polar group is a species selected from a group including OH, NH₂, COOH, SO₃H and ethylene oxide.

5. The antifouling resin composition according to anyone of the claims 1 to 4, containing in addition to said resin (A) a further resin (B),
wherein the complete composition having a ratio of said resin (A) to said resin (B) of from 2 : 98 to 98 : 2.

6. The antifouling resin composition according to claim 5,
wherein
said resin (B) is a species selected from a group including silicone resins, acrylic resins, polyester resins and chlorinated rubber.

7. The antifouling resin composition according to claim 5 or 6,
wherein
both, said resin (A) and said resin (B) forming an interpenetrating polymer network (IPN).

8. The antifouling resin composition according to claim 7,
wherein
said resin (B) is a silicone resin.

## Patentansprüche

1. Antifouling-Harzzusammensetzung, mit
- einem Harz (A), das eine Ethylen-Hauptkette mit anhängenden Gruppen aufweist, wobei
- wenigstens 5 % dieser anhängenden Grupen Carboxylgruppen sind, und wobei
- die Anzahl dieser Carboxylgruppen gleich 5 bis 95 % der Gesamtzahl der anhängenden Gruppen ist, und
- dieses Harz (A) über eine Amidbindung oder über eine Esterbindung mit Gruppen der nachstehenden allgemeinen Formel (1 ) verknüpft ist:
X―R―D― (1)
wobei X―R― für eine Gruppe der nachstehenden allgemeinen Formel (4) steht: 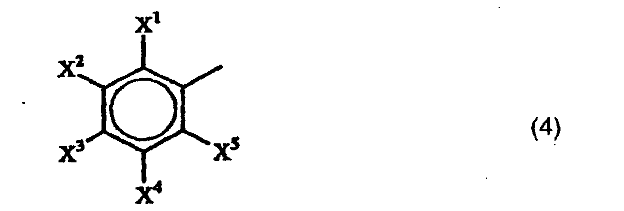
wobei:
wenigstens einer der Substituenten X¹, X², X³, X⁴ und X⁵ für eine verzweigte oder geradkettige Alkylgruppe mit 6 bis 10 Kohlenstoffatomen steht; und
wenigstens einer der Substituenten X¹, X², X³, X⁴ und X⁵ für eine polare Gruppe steht; und
einer oder mehrere der verbleibenden Substituenten X¹, X², X³, X⁴ und X⁵ für Wasserstoff steht; und
D für einen hydrophilen polymeren Rest steht.

2. Antifouling-Harzzusammensetzung nach Anspruch 1,
**dadurch gekennzeichnet, dass**
D für einen hydrophilen polymeren Rest steht, der ausgewählt ist aus Resten, die Polyalkylenoxy-Gruppen enthalten, sowie aus Resten, die kettenförmige Polyamid-Gruppen enthalten.

3. Antifouling-Harzzusammensetzung nach Anspruch 1 oder 2,
**dadurch gekennzeichnet, dass**
R―D― für eine Gruppe entsprechend einer der nachfolgenden allgemeinen Formeln (2) oder (3) steht: 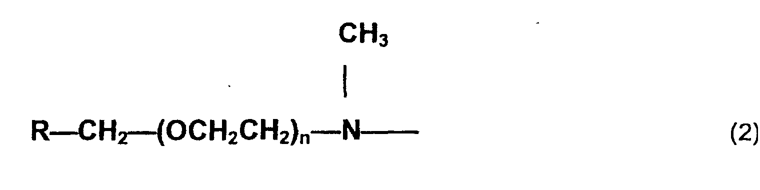 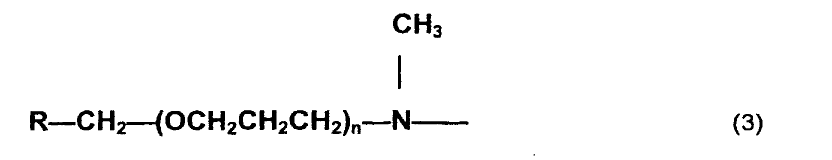 wobei "n" eine ganze Zahl von 2 bis 16 ist.

4. Antifouling-Harzzusammensetzung nach Anspruch 1,
**dadurch gekennzeichnet, dass**
diese polare Gruppe ausgewählt ist aus den nachfolgenden Gruppen, nämlich: OH, NH₂, COOH, SO₃H und Ethylenoxid.

5. Antifouling-Harzzusammensetzung nach einem der Ansprüche 1 bis 4,
**dadurch gekennzeichnet, dass**
die Harzzusammensetzung zusätzlich zu diesem Harz (A) ein weiteres Harz (B) enthält; und
diese Gesamtzusammensetzung ein Verhältnis der Anteile des Harzes (A) zu den Anteilen des Harzes (B) von 2 : 98 zu 98 : 2 aufweist.

6. Antifouling-Harzzusammensetzung nach Anspruch 5,
**dadurch gekennzeichnet, dass**
dieses Harz (B) ausgewählt ist aus Siliconharzen, Acrylharzen, Polyesterharzen und chloriertem Kautschuk.

7. Antifouling-Harzzusammensetzung nach Anspruch 5 oder 6,
**dadurch gekennzeichnet, dass**
beide Harze (A) und (B) zusammen ein sich wechselseitg durchdringendes polymeres Netzwerk (IPN von englisch: interpenetrating polymer network) bilden.

8. Antifouling-Harzzusammensetzung nach Anspruch 7,
**dadurch gekennzeichnet, dass**
dieses Harz (B) ein Siliconharz ist.

## Revendications

1. Une composition résineuse antifouling comprenant
- une résine (A) ayant une chaîne principale éthylène avec des groupes pendants dans laquelle
-- au moins 5% de ces groupes pendants sont des groupes carboxyle et
-- le nombre de ces groupes carboxyle est égal à 5 à 95% du nombre total des groupes pendants,
- cette résine (A) étant combinée par une liaison amide ou par une liaison ester aux groupes de la formule générale (1) suivante
**X-R-D-** (I)
dans laquelle
X―R― représente un groupe de la formule générale (4) suivante : 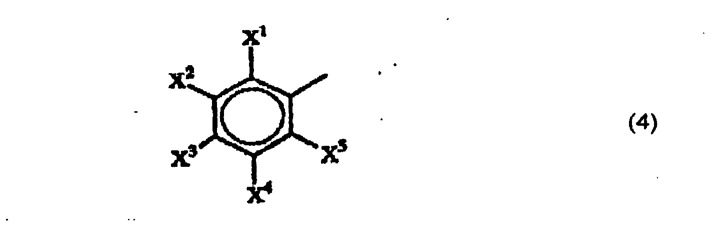
dans laquelle
au moins un des substituants X¹, X², X³, X⁴et X⁵ représente un groupe alkyl à chaîne ramifiée ou à chaîne linéaire ayant 6 à 10 atomes de carbone ; et
au moins un des substituants X¹, X², X³, X⁴et X⁵ représente un groupe polaire ; et
un ou plusieurs des substituants restants X¹, X², X³, X⁴et X⁵ représente(nt) l'hydrogène ; et
D représente un résidu hydrophile polymère.

2. La composition résineuse antifouling conforme à la revendication 1,
**caractérisée en ce que** :
D représente un résidu hydrophile polymère choisi parmi des résidus comprenant des groupes polyalkylèneoxy ainsi que des résidus comprenant des groupes polyamide sous forme de chaîne.

3. La composition résineuse antifouling conforme à la revendication 1 ou 2,
**caractérisée en ce que** :
R―D―représente un groupe conformément à une des formules générales (2) ou (3) suivantes : 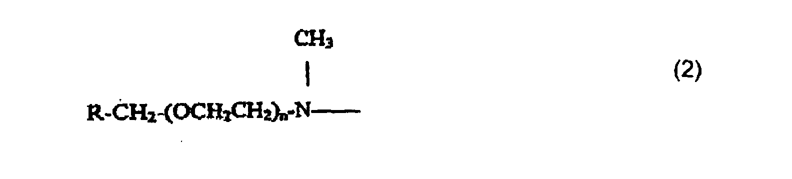 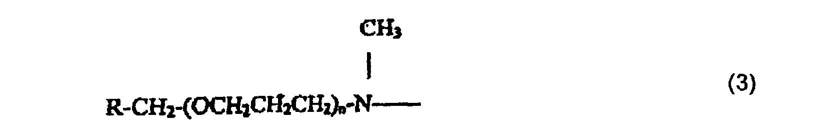 dans lesquelles
n est un nombre entier entre 2 et 16.

4. La composition résineuse antifouling conforme à la revendication 1,
**caractérisée en ce que** :
le groupe polaire est choisi parmi les groupes suivants, notamment : OH, NH₂, COOH, SO₃H et l'oxyde d'éthylène.

5. La composition résineuse antifouling conforme à une des revendications 1 à 4,
**caractérisée en ce que** :
cette composition résineuse comprend outre la résine (A) une autre résine (B) ; et
la proportion de la résine (A) par rapport à la résine (B) dans cette composition totale étant de 2 à 98 jusqu'à 98 à 2.

6. La composition résineuse antifouling conforme à la revendication 5,
**caractérisée en ce que** :
cette résine est choisie parmi les résines silicone, les résines acryl, les résines polyester et le caoutchouc chloré.

7. La composition résineuse antifouling conforme à la revendication 5 ou 6,
**caractérisée en ce que** :
les deux résines (A) et (B) forment un réseau polymère interpénétré (IPN en anglais : interpenetrating polymer network).

8. La composition résineuse antifouling conforme à la revendication 7,
**caractérisée en ce que** :
la résine (B) est une résine silicone.
